(19) Europäisches Patentamt
European Patent Office
Office européen des brevets

(11) **EP 1 690 910 B1**

(12) **EUROPEAN PATENT SPECIFICATION**

(45) Date of publication and mention
of the grant of the patent:
**13.06.2012 Bulletin 2012/24**

(51) Int Cl.:
***C09K 5/04*** *(2006.01)*

(21) Application number: **04726414.8**

(86) International application number:
**PCT/CN2004/000320**

(22) Date of filing: **08.04.2004**

(87) International publication number:
**WO 2005/047418 (26.05.2005 Gazette 2005/21)**

(54) **ENVIRONMENTAL REFRIGERANT INSTEAD OF R502**

UMWELTVERTRÄGLICHES KÜHLMITTEL ALS ERSATZ FÜR R502

REFRIGERANT NON POLLUANT EN REMPLACEMENT DU R502

(84) Designated Contracting States:
**AT BE BG CH CY CZ DE DK EE ES FI FR GB GR HU IE IT LI LU MC NL PL PT RO SE SI SK TR**

(30) Priority: **12.11.2003 CN 03808660**

(43) Date of publication of application:
**16.08.2006 Bulletin 2006/33**

(73) Proprietor: **Zhejiang Lantian Environmental Protection Hi-Tech Co, Ltd Hangzhou Zhejiang 310012 (CN)**

(72) Inventors:
• **GUO, Zhikai**
  **2nd Floor Deyuan Building**
  **Zhejiang 310012 (CN)**
• **CHEN, Guangming**
  **2nd Floor**
  **Deyuan Building**
  **Zhejiang 310012 (CN)**
• **XUAN, Yongmei**
  **2nd Floor**
  **Deyuan Building**
  **Zhejiang 310012 (CN)**
• **GUO, Xinzheng**
  **2nd Floor**
  **Deyuan Building**
  **Zhejiang 310012 (CN)**

(74) Representative: **Chamberlain, Alan James et al Haseltine Lake LLP Redcliff Quay 120 Redcliff Street Bristol BS1 6HU (GB)**

(56) References cited:
EP-A- 0 626 435    EP-A1- 0 526 745
EP-A1- 0 583 179    WO-A1-92/01762
WO-A1-94/00528    WO-A1-97/07182
GB-A- 2 298 866    JP-A- 5 017 755
JP-A- 7 173 462    JP-A- 8 100 170
US-A- 5 211 867    US-A- 5 277 834

**Description**

FIELD OF THE INVENTION

The present invention relates to a refrigerant, and more specifically, relates to an environmentally friendly refrigerant, which can be used as an alternative fluid for R502, a commercial binary azeotrope of 48.8 weight percent of HCFC-22 (Chlorodifluoromethane, or R22) and 51.2 weight percent of CFC-115 (Chloropentafluoroethane, or R115).

DESCRIPTION OF THE RELATED ART

R502 is a binary azeotropic mixture which comprises 48.8 weight percent of HCFC-22 and 51.2 weight percent of CFC-115. Its boiling point is -45.4°C. Because of its favorable characteristics in physics, chemistry and thermodynamic, R502 is broadly used as a medium temperature refrigerant.

However, R502 includes a large amount of CFC-115 whose ODP is 10300. CFC-115 belongs to first group of forbidden substances according to Montreal Protocol and its amendments and should be phased out by the year 1996 in developed countries, and before 2010 in developing countries. HCFC-22, another component in R502, has an ODP of 0.055, though much smaller than that of CFC-115, it still has an unfavorable effect to ozone layer. The deadline for HCFC-22 is 2020 in developed countries and 2030 in developing countries, respectively.

Binary or ternary mixtures of hydrofluorocarbons are usually used as alternative refrigerants for R502 presently, such as R404A and R507. Among these mixtures, R404A is a ternary near azeotropic mixture. Its volumetric cooling capacity and efficiency is near to those of R502. Its discharge temperature is lower than that of R502. R404A is a preferable alternative refrigerant for R502. R507 is a binary azeotropic mixture. Though seldom used, R507 can be used in most R404A equipments.

As far as the issue of environment protection concerned, the shortcomings of those above-mentioned alternative refrigerants become evident. Although their ODP are all zero and has no ozone depletion potential to the atmosphere, their GWP are high and is unsuitable with the guideline of environment protection. It is essential to study on new alternative refrigerants for R502.

Examples of conventional refrigerants are described in EP 0626435, US 5,277,834, WO 92/01762, GB 2298866, EP 0583179 and US 5,211,867.

The present invention discloses a ternary mixture of HFC refrigerant as a new alternative refrigerant for R502.

SUMMARY OF THE INVENTION

An object of the present invention is to provide an environmentally friendly refrigeration fluid, which can be used as a substitute for R502.

According to the present invention, there is provided a refrigeration fluid comprising 1 to 30% by mass of fluoroethane (HFC-161), 35 to 65% by mass of pentafluoroethane (HFC-125) and 5 to 64% by mass of trifluoroethane (HFC-143a).

The present invention has the following advantages.

1. It is a near-azeotropic refrigerant. Its temperature glide is smaller than that of R404A.

2. It is environmentally friendly. Its ODP is zero. Its GWP is lower than both R502 and its main alternative refrigerant R404A.

3. Its thermodynamic characteristics such as operation pressures and pressure ratio are close to those of R502. Without changing the main equipment in the refrigeration system, its thermodynamic parameters such as cooling capacity per unit mass and discharge temperature are both better than those of R502. Although its COP value is slightly lower than that of R502, it is higher than that of R404A. Therefore, the present invention can be a long-term alternative refrigerant to R502. In addition, less charge mass is needed according to the present invention.

DETAILED DESCRIPTION OF THE INVENTION

An object of this invention is to provide a novel alternative refrigerant for R502, which has zero ozone depletion potential, and low global warming potential. Furthermore, the refrigerant disclosed has similar thermodynamic properties with R502, and can be a drop-in substitute for R502.

The present invention discloses a novel refrigerant, characterized in that it comprises fluoroethane (HFC-161), pentafluoroethane (HFC-125) and trifluoroethane (HFC-143a).

The preferred compositions comprise 1 to 30% by mass of fluoroethane (HFC-161), 35 to 65% by mass of pentafluoroethane (HFC-125) and 5 to 64% by mass of trifluoroethane (HFC-143a).

The more preferred compositions comprise 5 to 18% by mass of fluoroethane (HFC-161), 38 to 58% by mass of pentafluoroethane (HFC-125) and 24 to 57% by mass of trifluoroethane (HFC-143a).

The most preferred compositions comprise 8 to 15% by mass of fluoroethane (HFC-161), 40 to 55% by mass of pentafluoroethane (HFC-125) and 30 to 52% by mass of trifluoroethane (HFC-143a).

The preparation method of this novel fluid is to mix each liquid component according to the mass percentage ratio.

In the above compositions, the molecular formula of fluoroethane (HFC-161) is $CH_3CH_2F$. Its molecular weight is 48.06. Its normal boiling point is -37.1°C. Its critical temperature is 102.2°C. Its critical pressure is 4.7MPa.

In the above compositions, the molecular formula of pentafluoroethane (HFC-125) is $CHF_2CF_3$. Its molecular weight is 120.02. Its normal boiling point is -48.1°C. Its critical temperature is 66.2°C. Its critical pressure is 3.63MPa.

In the above compositions, the molecular formula of trifluoroethane (HFC-143a) is $CH_3CF_3$. Its molecular weight is 84.04. Its normal boiling point is -47.2°C. Its critical temperature is 72.9°C. Its critical pressure is 3.78MPa.

The present invention will be illustrated by referring to the following Examples.

Example 1. HFC-161, HFC-125 and HFC-143a are mixed in liquid phase according to the percentage ratio by mass of 1:35:64.

Example 2. HFC-161, HFC-125 and HFC-143a are mixed in liquid phase according to the percentage ratio by mass of 5:38:57.

Example 3. HFC-161, HFC-125 and HFC-143a are mixed in liquid phase according to the percentage ratio by mass of 8:40:52.

Example 4. HFC-161, HFC-125 and HFC-143a are mixed in liquid phase according to the percentage ratio by mass of 10:45:45.

Example 5. HFC-161, HFC-125 and HFC-143a are mixed in liquid phase according to the percentage ratio by mass of 12:48:40.

Example 6. HFC-161, HFC-125 and HFC-143a are mixed in liquid phase according to the percentage ratio by mass of 15:50:35.

Example 7. HFC-161, HFC-125 and HFC-143a are mixed in liquid phase according to the percentage ratio by mass of 18:55:27.

Example 8. HFC-161, HFC-125 and HFC-143a are mixed in liquid phase according to the percentage ratio by mass of 20:58:22.

Example 9. HFC-161, HFC-125 and HFC-143a are mixed in liquid phase according to the percentage ratio by mass of 25:60:15.

Example 10. HFC-161, HFC-125 and HFC-143a are mixed in liquid phase according to the percentage ratio by mass of 30:65:5.

The characteristics of each Example are compared with R502 and its main substitute R404A in order to illustrate the features and effects of the present invention.

**a. Near-azeotropic**

**Table 1. Comparison of Temperature Glide, °C.**

|  | Bubble Point | Dew point | Temperature glide |  | Bubble Point | Dew point | Temperature glide |
|---|---|---|---|---|---|---|---|
| Example 1 | -46.98 | -46.96 | 0.02 | Example 6 | -45.51 | -44.85 | 0.66 |
| Example 2 | -46.61 | -46.46 | 0.15 | Example 7 | -45.12 | -44.27 | 0.85 |
| Example 3 | -46.31 | -46.04 | 0.27 | Example 8 | -44.85 | -43.88 | 0.97 |
| Example 4 | -46.08 | -45.70 | 0.38 | Example 9 | -44.19 | -43.00 | 1.19 |
| Example 5 | -45.85 | -45.36 | 0.49 | Example 10 | -43.44 | -42.07 | 1.37 |
| R404A | -46.56 | -45.78 | 0.78 |  |  |  |  |

(Note: The bubble point and dew point temperatures in Table 1 are saturation temperatures corresponding to standard atmosphere, 101.325kPa)

As shown in Table 1, the temperature glide of each Example mixture is low and belongs to near azeotropic refrigerant. The temperature glides of Example mixtures 1 to 6 are even lower than that of R404A.

**b. Environmental characteristics**

The environmental characteristics of each Example mixture and R502, R404A are illustrated in Table 2. The ODP of CFC-11 is set to be 1.0. The GWP of $CO_2$ is set to be 1.0 (100 years).

**Table 2. Comparison of Environmental Characteristics**

|  | ODP | GWP |  | ODP | GWP |
|---|---|---|---|---|---|
| Example 1 | 0 | 3455 | Example 6 | 0 | 2403 |
| Example 2 | 0 | 3153 | Example 7 | 0 | 2173 |
| Example 3 | 0 | 2938 | Example 8 | 0 | 2025 |
| Example 4 | 0 | 2759 | Example 9 | 0 | 1738 8 |
| Example 5 | 0 | 2604 | Example 10 | 0 | 1427 |
| R502 | 0.224 | 5490 | R404A | 0 | 3260 |

The data in Table 2 indicate that each Example mixture has zero ODP, meaning no depletion potential to ozone layer, which is better than R502.

Furthermore, the GWP of each Example mixture is smaller than that of R502. The GWP of each Example mixture only accounts for 20 to 63% of the GWP of R502. Except Example mixture 1, the GWP of each Example mixture is smaller than that of R404A. The GWP of Example mixture 2 to Example mixture 10 is 44 to 97% of the GWP of R404A.

c. Thermodynamic parameters and properties

Thermodynamic parameters (evaporative pressure $P_0$, condensing pressure $P_k$, pressure ratio $P_k/P_0$, discharge temperature $t_2$) as well as relative thermodynamic properties (relative COP, relative cooling capacity per unit mass $q_0$, relative volumetric cooling capacity $q_v$, compressor power consumption per unit volume $w_v$) of each Example mixture are compared with those of R502 and R404A in Table 3 under the conditions wherein the evaporative temperature is -40°C, the condensing temperature is 35°C, the suction temperature is -10°C and the subcooling temperature is 30°C. The relative thermodynamic properties herein refer to the cycle performances comparison of alternative refrigerant (each Example mixture, R404A) with those of R502.

**Table 3. Comparison of Thermodynamic Parameters**

|  | $P_0$ (MPa) | $P_k$ (MPa) | $\dfrac{p_k}{p_0}$ | $t_2$ (°C) | Relative COP | Relative qo | Relative $q_v$ | Relative $w_v$ |
|---|---|---|---|---|---|---|---|---|
| Example 1 | 0.140 | 1.638 | 11.73 | 75.43 | 0.973 | 1.149 | 1.048 | 1.068 |
| Example 2 | 0.137 | 1.615 | 11.83 | 76.24 | 0.978 | 1.190 | 1.037 | 1.053 |
| Example 3 | 0.134 | 1.597 | 11.92 | 76.89 | 0.982 | 1.222 | 1.027 | 1.040 |
| Example 4 | 0.133 | 1.589 | 11.98 | 76.97 | 0.984 | 1.228 | 1.021 | 1.032 |
| Example 5 | 0.131 | 1.575 | 12.07 | 77.23 | 0.987 | 1.244 | 1.012 | 1.021 |
| Example 6 | 0.128 | 1.556 | 12.21 | 78.02 | 0.989 | 1.277 | 0.997 | 1.006 |
| Example 7 | 0.125 | 1.537 | 12.32 | 78.43 | 0.992 | 1.299 | 0.985 | 0.990 |
| Example 8 | 0.123 | 1.521 | 12.42 | 78.71 | 0.995 | 1.316 | 0.974 | 0.978 |
| Example 9 | 0.118 | 1.485 | 12.57 | 80.05 | 1.003 | 1.380 | 0.955 | 0.954 |
| Example 10 | 0.113 | 1.449 | 12.80 | 81.07 | 1.008 | 1.433 | 0.930 | 0.925 |
| R502 | 0.127 | 1.491 | 11.69 | 80.51 | 1.000 | 1.000 | 1.000 | 1.000 |
| R404A | 0.134 | 1.613 | 12.04 | 74.46 | 0.970 | 1.107 | 1.010 | 1.032 |

The results presented in Table 3 indicate that under the above working conditions, the condensing pressures, evaporative pressures and pressure ratios of the each Example mixture is in safe operating range, and are close to that of R502. Therefore, they can be used as drop-in substitutes for R502. Except Example mixture 10, the discharge temperatures of all the Example mixtures are lower than that of R502. The cooling capacity per unit mass of each Example mixture is higher than those of R502 and R404A. Therefore, less charge mass is needed for replacement of R502. Although the COP value of Example mixture 1 to 8 are slightly smaller than that of R502, the COP value of each Example mixture is higher than that of R404A. Furthermore, their volumetric cooling capacities and compressor power consumptions per unit volume are nearly equal to those of R502 and R404A. Therefore, compressors for R502 and R404A can be used directly with the alternative refrigerant and few alternations or replacements are required.

**Claims**

1. An environmentally friendly refrigerant, said fluid comprising fluoroethane (HFC-161), pentafluoroethane (HFC-125) and trifluoroethane (HFC-143a).

2. The refrigerant as claimed in claim 1, wherein said fluid comprises 1 to 30% by mass of fluoroethane (HFC-161), 35 to 65% by mass of pentafluoroethane (HFC-125) and 5 to 64% by mass of trifluoroethane (HFC-143a).

3. The refrigerant as claimed in claim 1, wherein said fluid comprise 5 to 18% by mass of fluoroethane (HFC-161), 38 to 58% by mass of pentafluoroethane (HFC-125) and 24 to 57% by mass of trifluoroethane (HFC-143a).

4. The refrigerant as claimed in claim 1, wherein said fluid comprise 8 to 15% by mass of fluoroethane (HFC-161), 40 to 55% by mass of pentafluoroethane (HFC-125) and 30 to 52% by mass of trifluoroethane (HFC-143a).

**Patentansprüche**

1. Umweltfreundliches Kühlmittel, wobei das Fluid Fluorethan (HFC-161), Pentafluorethan (HFC-125) und Trifluorethan (HFC-143a) umfasst.

2. Kühlmittel gemäß Anspruch 1, wobei das Fluid 1 bis 30 Gew.-% Fluorethan (HFC-161) umfasst, 35 bis 65 Gew.-% Pentafluorethan (HFC-125) und 5 bis 64 Gew.-% Trifluorethan (HFC-143a).

3. Kühlmittel gemäß Anspruch 1, wobei das Fluid 5 bis 18 Gew.-% Fluorethan (HFC-161) umfasst, 38 bis 58 Gew.-% Pentafluorethan (HFC-125) und 24 bis 57 Gew.-% Trifluorethan (HFC-143a).

4. Kühlmittel gemäß Anspruch 1, wobei das Fluid 8 bis 15 Gew.-% Fluorethan (HFC-161) umfasst, 40 bis 55 Gew.-% Pentafluorethan (HFC-125) und 30 bis 52 Gew.-% Trifluorethan (HFC-143a).

**Revendications**

1. Réfrigérant écologique, ledit fluide comprenant du fluoroéthane (HFC-161), du pentafluoroéthane (HFC-125) et du trifluoroéthane (HFC-143a).

2. Réfrigérant selon la revendication 1, dans lequel ledit fluide comprend 1 à 30 pour cent en masse de fluoroéthane (HFC-161), 35 à 65 pour cent en masse de pentafluoroéthane (HFC-125) et 5 à 64 pour cent en masse de trifluoroéthane (HFC-143a).

3. Réfrigérant selon la revendication 1, dans lequel ledit fluide comprend 5 à 18 pour cent en masse de fluoroéthane (HFC-161), 38 à 58 pour cent en masse de pentafluoroéthane (HFC-125) et 24 à 57 pour cent en masse de trifluoroéthane (HFC-143a).

4. Réfrigérant selon la revendication 1, dans lequel ledit fluide comprend 8 à 15 pour cent en masse de fluoroéthane (HFC-161), 40 à 55 pour cent en masse de pentafluoroéthane (HFC-125) et 30 à 52 pour cent en masse de trifluoroéthane (HFC-143a).

**EP 1 690 910 B1**

**REFERENCES CITED IN THE DESCRIPTION**

**Patent documents cited in the description**

- EP 0626435 A
- US 5277834 A
- WO 9201762 A
- GB 2298866 A
- EP 0583179 A
- US 5211867 A